# EUROPÄISCHE PATENTANMELDUNG

(11) **EP 0 896 870 A2**
(43) Veröffentlichungstag der Anmeldung: **17.02.1999**
(21) Anmeldenummer: 98109595.3
(22) Anmeldetag: 27.05.1998
(51) Int. Cl.: B29C 44/44

(54) **EPS-Schäum- und Sinterverfahren und Vorrichtung**

(30) Priorität: 11.08.1997 DE 19734700
(71) Anmelder: Hahn, Ortwin, Prof. Dr.-Ing., 33100 Paderborn (DE)
(72) Erfinder: Hahn, Ortwin, Prf. Dr., 33100 Paderborn (DE); Siekaup, Rolf, 33089 Paderborn (DE)
(74) Vertreter: Hanewinkel, Lorenz, Dipl.-Phys.

(57) **Zusammenfassung**

Verfahren zum Herstellen von EPS-Schaumstoffteilen, bei dem mit einem flüssigen Treibmittel beladenes EPS-Granulat (EPS-G) mit einem Wärmeübertragungsmedium vorgeschäumt werden, anschließend abgekühlt werden, bis das Treibmittel kondensiert ist, und dann die geschäumten EPS-Perlen (EPS-P) in eine Formvorrichtung (F1, F2) verbracht und wieder erwärmt werden und ein dabei entstehendes gesintertes Formteil (EPS-F) und abgekühlt entformt und in einem Umgebungsmedium konditioniert wird, wobei als das Wärmeübertragungsmedium und/oder als Umgebungsmedium beim Vorschäumen und/oder beim Erwärmen und Sintern des Formteiles und/oder beim Abkühlen und/oder Konditionieren der EPS-Perlen (EPS-P) und/oder des Formteils (EPS-F) im wesentlichen ein hochpermeierendes Permanentgas, insbesondere Kohlensäuregas, oder ein Permanentgas-Treibgasgemisch benutzt wird.

## Beschreibung

Die Erfindung betrifft ein Verfahren zum Herstellen von EPS-Schaumstoffteilen, bei dem mit einem flüssigen Treibmittel beladene EPS-Partikel mit einem Wärmeübertragungsmedium vorgeschäumt werden, anschließend abgekühlt werden, bis das Treibmittel kondensiert ist, und dann die geschäumten EPS-Perlen in einen Formhohlraum in eine Formvorrichtung verbracht und wieder erwärmt werden und ein dabei dementsprechend entstehendes Formteil gesintert und abgekühlt entformt und in einem Umgebungsmedium konditioniert wird.

Es ist bekannt, expandierbares, d. h. mit einem expandierbaren vergasenden Medium beladenes Polystyrolgranulat durch eine Behandlung mit einem Wärmeträgergas, dem Vorschäumen, zu expandieren, die so aufgeblähten EPS-Perlen, die u.a. mit einem verbliebenen Anteil von dem expandierbaren Medium gefüllt sind, zwecks einer Stabilisierung der im Perleninneren entstehenden Gasmischung, die außer dem Expansionsmitteldampf aus Luft und dem Wärmeträgermaterial besteht, zwischenzulagern und die stabilisierten EPS-Perlen in eine Form einzubringen, in der sie durch Wärmezufuhr erweicht, weiter aufgeschäumt und versintert werden, und dann die gesinterten Teile durch Abkühlen zu verfestigen und dann zu entformen und danach diese Teile gewöhnlich weiter zu konditionieren und zu stabilisieren. Bei diesem bekannten Verfahren wird als Wärmeträger zum Vorschäumen und zum Sintern Wasserdampf eingesetzt, dessen Kondensationswarme zum Erweichen des EPS und zum Verdampfen des Treibmittels genutzt wird, was jedoch zur Entstehung von Kondensat äußerlich und innerlich der vorgeschäumten EPS-Perlen als auch der fertiggeschäumten Sinterprodukte führt.

Beim Abkühlen kondensiert jeweils das Treibmittel, und in die dann freiwerdenden aufgeblähten Innenräume dringt zuerst im wesentlichen Wasserdampf ein, der eine um mehrere Größenordnungen höhere Permeation als die Bestandteile der umgebenden Luft aufweist. Erst während der sehr langen, i.a. Stunden dauernden, Konditionierzeiten werden die Feuchtigkeit und der Wasserdampf entfernt und der innere Expansionsraum der Perlen mit Luft nachgefüllt, was in der Praxis große Lagerkapazitäten verlangt und zu einem zeitlich unterschiedlichen Expandiergas-Luftgemisch im Vorschäumprodukt führt. Diese Variationsbreite beeinträchtigt die Funktion des nachfolgenden Sinterprozesses und verlangt erheblichen Steuer- und Regelaufwand, um trotzdem stets brauchbare Sinterteile zu erhalten.

Bei den entformten Sinterteilen führt der beim Abkühlen in den Vakuolen bis zur Auffüllung mit Luft entstehenden Unterdruck ein Schrumpfen oder Verformen der Sinterteile herbei.

Außerdem laßt sich kaum vermeiden, daß das Expandiergas, das gewöhnlich Pentan ist, beim großräumigen Konditionieren in einer Lagerhalle in die Atmosphäre entweicht.

Es ist Aufgabe der Erfindung, das vorbeschriebene Verfahren wesentlich zu verbessern und eine vereinfachte Vorrichtung zu dessen Durchführung zu schaffen.

Die Lösung besteht bei einem Verfahren nach dem Oberbegriff des Patentanspruches 1 darin, daß als das Wärmeübertragungsmedium und/oder als Umgebungsmedium beim Vorschäumen und/oder beim Erwärmen und Sintern des Formteiles und/oder beim Abkühlen und/oder Konditionieren der EPS-Perlen und/oder des Formteils im wesentlichen ein hochpermeierendes Permanentgas, insbesondere Kohlensäuregas, oder ein Permanentgas-Treibgasgemisch benutzt wird.

Eine Vorrichtung zur Durchführung des Verfahrens ist im Anspruch 12 und folgenden angegeben.

Vorteilhafte Ausführungen sind in den Unteransprüchen angegeben.

Der Vorteil von Kohlensäure oder einem anderen hochpermeierenden Gas beim Schäumen und Sintern ist, daß die Perlen und das Sinterteil keine Feuchtigkeit und keinen Wasserdampf aufnehmen, der beim Abkühlen, wie auch das Expandiermedium in den gebildeten Kavernen kondensiert und einen Unterdruck hinterläßt, wenn sich anschließend nur Luft in der Umgebung befindet, die einen relativ geringen Permeationskoeffizienten von 1,508 (Sauerstoff) bis 0,297 (Stickstoff) hat. Das erfindungsgemäß verwendete Permanentgas bzw. Kohlensäuregas, das im ganzen Temperaturbereich des Vorschäumens und des Fertigschäumens gasförmig ist, hat demgegenüber einen wesentlich größeren Permeationskoeffizienten von 6,056, so daß sich die gebildeten Innenräume der Perlen und des Sinterproduktes entsprechend schneller füllen. Auch Helium mit einem Permeationskoeffizienten von 5,130 eignet sich beispielsweise. Ein langsames Ausdiffundieren von Feuchtigkeit entfällt. Das Verfahren arbeitet somit trocken; die Produkte und das Zwischenprodukt sind stets trocken. Ein lang dauerndes Zwischenkonditionieren entfällt und damit entfallen die Lagerräume dafür, die üblich benötigt wurden. Ein kleiner Konditionierraum beispielsweise von der Größe des Schäumgerätes dient als Zwischenspeicher der Perlen. Darin befindliche Permanentgase, z.B. die Kohlensäure, füllt die EPS-Perlen schnell innen auf. Die Perlen sind in stets gleicher Kondition für die Injektion in die Formvorrichtung verfügbar. Da keine Feuchtigkeit außer flüssigem Treibgas, falls dessen Kondensationstemperatur unterschritten ist, in den Perlen vorhanden ist, steht die in die Sintervorrichtung eingebrachte Wärme voll dem Erweichen des Kunststoffes und dem erneuten Verdampfen des Treibmittels zur Verfügung.

Vorteilhaft wird auch das Nachkonditionieren des gesinterten Fertigteiles kurzzeitig in einer Permanentgas- z.B. Kohlensäureatmosphäre vorgenommen, da das schnell eindringende Kohlensäuregas ein Schrumpfen und Kollabieren der Kavernen verhindert, wenn das Treibgas kondensiert, wodurch die Maßhaltigkeit der Teile gesteigert wird.

Weiterhin ist es vorteilhaft, zum schnellen Abkühlen der Formteile flüssige Kohlensäure in die Form einzudüsen, wobei bekanntlich sehr schnell die Verdampfungswärme der Kohlensäure dem zu kühlenden Objekt entzogen wird. Hierdurch sind die Kühltaktzeiten relativ kurz. Ansonsten hat die Kohlensäure den Vorteil, daß sie mit relativ geringem Energieeinsatz verflüssigt und dann kompakt gespeichert werden kann. Außerdem ist sie gefahrlos zu handhaben.

Auch das Fördern der erzeugten EPS-Perlen und das Entformen der Fertigteile wird vorteilhaft mit Kohlensäuregas vorgenommen, so daß die Gesamtanlage im wesentlichen nur Kohlensäure oder ein anderes Permanentgas und aus dem Einsatzmaterial aufgenommenes Treibgas enthält. Die Kohlensäure und auch ein gewisser Treibgasanteil bleiben stets im Heiz-, Kühl, Transport- und Konditioniermittelkreislauf. Nur kleine Mengen Kohlensäure verlassen beim Durchspülen des Einsatzmaterials und beim Ausformen mit den Fertigteilen die Anlage und sind zu ersetzen.

Der Gehalt an Treibgas in der Kohlensäureatmosphäre, der sich beim Aufheizen des EPS durch Ausdiffundieren ergibt, läßt sich durch Kondensieren des Treibmittels in einer Kühlfalle reduzieren. Falls eine Kohlensäurekältemaschine zum Einsatz kommt, kann die in der ersten Expansionsstufe auftretende Abkühlung des Gasgemisches zum Ausscheiden des dadurch verflüssigten Treibmittels genutzt werden. Das ausgeschiedene Treibgas kann recyclet werden.

Alternativ kann das Treibmittel, das gewöhnlich Pentan ist, in einem Katalytbrenner unter Sauerstoffzusatz oder ggf. mit in das System beim Beschicken mit EPS-Material eintretender Luft zu Wasserdampf und Kohlensäuregas verbrannt werden. Vorzugsweise wird in einem nachgeschalteten Kühler der Wasserdampf kondensiert und ausgeschieden, so daß die entstandene Kohlensäure trocken in den Kreislauf eingeschleust werden kann.

Die aus den Prozessen freigewordene Kohlensäure wird zum einen verdichtet und verflüssigt in einem Tank gespeichert und von dort zum Kühlen in dem Kreislauf wieder weitergeführt. Dies erlaubt eine kompakte Speicherung des Prozeßmediums im Gegensatz zur Verwendung von Helium, das nur mit sehr hohem Energieaufwand zu verflüssigen ist.

Vorzugsweise wird die warme Kohlensäure, die aus dem Vorschäumer und der Formvorrichtung abgeführt wird, zwischengepuffert und über einen Kompressor und eine Nachheizvorrichtung in einen Heißkohlensäurespeicher geleitet, von wo das heiße Gas wieder in die Vorrichtungen als Wärmetransfermittel eingespeist wird.

In einer vorteilhaften Ausführung wird der Aufheizvorgang im Vorschäumer und/oder im Fertigschäumer durch eine elektrische Heizquelle beschleunigt, wobei gleichzeitig die Zufuhr von Heißgas und die Menge des mit Treibgas versetzten Abgases verringert und dessen Treibgaskonzentration erhöht wird. Im Vorschäumer wird zweckmäßig dazu ein Heißgasventilator mit einer elektrischen Heizvorrichtung eingesetzt. Im Fertigschäumer werden zweckmäßig die Formwände mit einer elektrischen Heizung belegt. Die elektrischen Heizungen werden jeweils thermostatisch geregelt, wodurch ein schnelles Aufheizen ermöglicht wird und eine Überhitzung des Kunststoffmaterials vermieden wird.

Zur Kompaktierung der Vorschäumanlage wird vorteilhaft dem Vorschäumer, in dem das Treibmittel verdampft und der Kunststoff erweicht wird, ein Konditionierer nachgeschaltet, in dem der Kunststoff wieder verfestigt wird und das Treibgas darin kondensiert und das Permanentgas in die Perlen eindiffundiert. Es handelt sich dabei um einen Behälter, in dem die Perlen, während sie von kühlendem Permanentgas bestrichen werden, durchgerührt werden, damit ein Verklumpen verhindert wird. Beide Anlagenteile können relativ klein sein.

Falls im Stoßbetrieb ein nachgeschalteter Fertigschäumer zu bedienen ist, wird zweckmäßig ein dementsprechend dimensionierter Pufferspeicher den Fertigschäumern vorgeschaltet. Da die Perlen keine Feuchtigkeit abgeben müssen, wie beim konventionellen Schäumen mit Wasserdampf, ist kein langer Prozeßschritt mit entsprechend großem Lagerbedarf erforderlich.

Soweit Vakuum in der Formvorrichtung zum schnellen Spülen verwandt wird, ist zweckmäßig ein Vakuumspeicher vorgesehen, aus dem eine Vakuumpumpe das einströmende Gas in den Kohlensäurepuffer treibt, wenn es sich im wesentlichen um Kohlensäure handelt, und wenn die Luft aus dem Einsatz-EPS-Material ausgespült wird, abbläst.

Vorteilhaft bleibt die Vorschäumanlage und auch die Sinteranlage in ihrer Grundkonstruktion weitgehend so wie bisher belassen. Es werden nur die Ventile und Anschlüsse für den Gaszutritt und den Gasaustritt sowie den Kühlmittelzutritt mit der Kohlensäureversorgung in dem Kreislauf zusammengeschaltet. Die Querschnitte sind entsprechend der vergleichsweise zu Sattdampf geringeren Wärmekapazität des Mediums größer zu dimensionieren, um eine schnelle Erwärmung zu erbringen. Soweit ein gewisser Anteil von Treibgas im Medium enthalten ist, erhöht dieser die Wärmekapazität, soweit es bei noch kaltem Einsatzmaterial zu dessen Kondensation kommt. Auch bringt der Treibgasgehalt in der Umgebung der Perlen eine geringere Ausdampfung derselben, so daß beim Sintern eine hohe interne Treibkraft verfügbar ist, was bei dem herkömmlichen Betrieb nicht im gleichen Maße der Fall ist.

Die Gesamtvorrichtung ist wegen der Einsparung des Lagerplatzes mit den üblichen Konditionierventilatoren außerordentlich kompakt. Selbstverständlich lassen sich auch mehrere Formvorrichtungen hinter einem Vorschäumer betreiben.

Auch eine Kombination einer konventionellen Baugruppe, die noch mit Dampf betrieben wird, mit einer Kohlensäurebaugruppe ist möglich, wobei das trockene Vorschäumen und die Konditionierung mit Kohlensäure und auch das schnelle Kühlen mit Flüssigkohlensäure jeweils besonders vorteilhaft sind. Eine laufende konventionelle Fertigungsanlage läßt sich somit Zug um Zug auf Kohlensäurebetrieb umstellen.

Daß die Kohlensäure ein preiswertes unschädliches Gas ist, sei nur der Vollständigkeit halber erwähnt.

Vorteilhafte Ausgestaltungen der Vorrichtung sind in den Figuren 1 bis 3 schematisch dargestellt.
Fig. 1 und 2 zeigen Schemata von Gesamtvorrichtungen.
Fig. 3 zeigt ein Detail aus Fig. 2.

Die prinzipielle Struktur einer Schäumanlage bestehend aus einem Vorschäumer (VS), einem dem nachgeschalteten Konditionierer (KR) und einem dem nachfolgenden Fertigschäumer, der Formvorrichtung (F1, F2), entspricht einer konventionellen Schäumanlage, wobei der neue Konditionierer jedoch sehr viel kleiner ist und deshalb unmittelbar an den Vorschäumer angeschlossen sein kann. Auch die eingangsseitige Ventilanordnungen an diesen Baugruppen entsprechen im Prinzip den bekannten, da durch diese das EPS-Granulat (G), das heiße Gas (HK), ein Transportgas, ein Kühlmittel (FK) und evtl. ein Vakuum dem Vorschäumer, dem Konditionierer und den Formteilen (F1, F2) der Sintervorrichtung gesteuert zugeführt werden müssen.

Neu ist, daß das aus den Baugruppen (VS, KR, F1, F2) austretende benutzte Betriebsgas in einer Abgasleitung (AL) gesammelt wird und nach entsprechender Aufbereitung im Kreislauf in die Zuleitung (ZL) des heißen Gases (HK) in die Flüssig-Kohlensäureleitung (FK) oder in die Transportgasleitung (TL) zurückgeführt wird.

Am Vorschäumer (VS) befindet sich ein gesteuerter EPS-Granulatanschluß (EPS-G) und ein gesteuerter Heißgasanschluß (HK). Das mit einem Rührwerk (RW) bewegte Granulat wird über den Erweichungsbereich auf mindestens 70°C aufgeheizt, so daß das dabei verdampfende Treibgas die EPS-Perlen (EPS-P) ausbildet, die gesteuert in den Konditionierer (KR) abgeführt werden. Das abgekühlte Gasmedium wird gesteuert in die Ableitung (AL) abgegeben und übernimmt jeweils zu gegebener Zeit den Transport der Perlen zum Konditionierer (KR). Dort wird die Temperatur der Perlen unter den Erweichungspunkt heruntergebracht. In bestimmten Anordnungen können jedoch auch noch teilerweichte Perlen in die Form weitergeleitet werden, was Kühl- und Heizenergie und Zeit spart. Aus dem Konditionierer (KR) wird das Kühl- und/oder Transportgas gesteuert in die Ableitung (AL) herausgelassen, oder es bringt die fertig konditionierten EPS-Perlen mit dem Injektor (I) in die Formvorrichtung (F1, F2), wo andererseits beispielsweise ein Vakuum über eine Vakuumleitung (VL) zu der Einfüllzeit angelegt wird.

Die gefüllten Formschalen sind von Hohlräumen (H1, H2) in bekannte Weise umgeben, durch die nach dem Füllen der Formkammer in bekannter Weise Heizmedium (HK) einerseits zu und nach der Wärmeabgabe andererseits abgeführt wird, wobei es gewöhnlich auch durch Poren in der Formwand geleitet das Sinterteil selbst zeitweise durchströmt. Anschließend wird für eine kurze Zeit mit vollem Druck von etwa 2 - 3 bar bei einer Temperatur von 90° - 120°C eine Autoklavphase abgesperrt abgewartet, wonach die Abkühlung unter den Erweichungspunkt des EPS vorzugsweise durch Einspritzen von Flüssigkohlensäure (FK) erfolgt, wobei bereits die Konditionierung und Stabilisierung des Formteils und seines Innendrucks eingeleitet wird. Anschließend wird das EPS-Fertigteil (EPS-F) nach der Öffnung der Form (F1, F2) ausgestoßen und vorzugsweise noch eine Weile in einer Kohlensäureatmosphäre nachkonditioniert. Dies kann in einer oben offenen Wanne oder auch in einer geschlossenen Kammer mit Kohlensäurefüllung geschehen.

Das durch die Abgasleitung (AL) abgeführte Gasgemisch aus Kohlensäure und Pentan wird kurzzeitig in einem Zwischenspeicher (ZSV) zwischengespeichert und in jedem Fall zu einem Teil in einem Kompressor (KP) und einer Nachheizvorrichtung (NH) als Heißkohlensäure (HK) aufbereitet und in einem Heißkohlensäurespeicher (HKS) bei etwa 2 - 3 bar gepuffert und von dort der Zuleitung (ZL) zugeführt.

Vorzugsweise wird ein weiterer Teil des Gases aus dem Zwischenspeicher (ZS) über eine Kältemaschine (KM) verflüssigt. Diese ist bevorzugt mehrstufig, so daß nach der Expansion des Gases nach der ersten Stufe (KM1) in einer Treibgaskühlfalle (TK1) Treibgas flüssig abgezapft und zurückgewonnen werden kann, so daß es nicht in die Atmosphäre entweicht.

In der letzten Stufe (KM3) fällt dann, wie gewöhnlich flüssige Kohlensäure (FK) an, die im Flüssigkeitstank (FSV) gespeichert wird. In diesen wird auch bei Bedarf Betriebs-Kohlensäure nachgespeist.

Die Vakuumleitung (VL) ist über einen Vakuumspeicher (VSP) an eine Vakuumpumpe (VP) angeschlossen, die die abgepumpte Kohlensäure in den Zwischenspeicher (ZSV) pumpt.

Wenn keine Treibgasrückgewinnung an der Kältemaschine (KM) erfolgt oder zusätzlich kann das Treibgas auch mit einer Treibgaskühlfalle (TK) aus der Abgasleitung (AL) entfernt werden.

Eine weitere Alternative dazu ist, die katalytische Verbrennung des Treibgases in einer Verbrennungsvorrichtung (TNV), der u.U. in dosierter Weise Sauerstoff zugeführt wird, wenn die mit dem Granulat eingebrachte Luft nicht ausreicht. Wird das Abgas des Brenners (TNV) nicht ins Freie geleitet, so wird das entstehende Wasser in einer Wasserkühlfalle (WK) abgesondert, wie gezeigt, und die Kohlensäure in den Zwischenspeicher (ZS) geführt.

Der Zwischenspeicher (ZSV) kann in zwei Zonen oder zwei getrennte Speicherräume aufgeteilt sein, so daß über zugehörige Steuerventile jeweils warmes Abgas im einen, insbesondere. oberen, Teil nahe dem Anschluß des Kompressors (KP) für das Heißgas eingespeist wird und jeweils relativ kaltes Abgas im anderen, insbesondere. unteren, Bereich nahe dem Anschluß der Kältemaschine (KM) eingespeist wird.

Ein Teil der Kondensationswärme (Q) der Kältemaschine (KM) läßt sich zum Vorheizen des Heißgases (HK) einsetzen. Die Speicher und Leitungen sind fachmännisch zu isolieren und mit Rückschlag- und Überdruckventilen auszustatten.

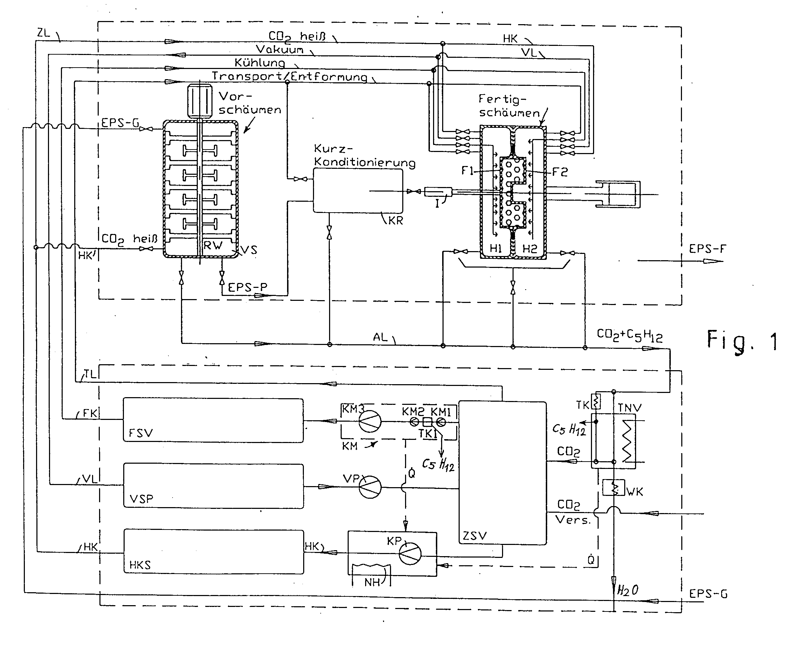

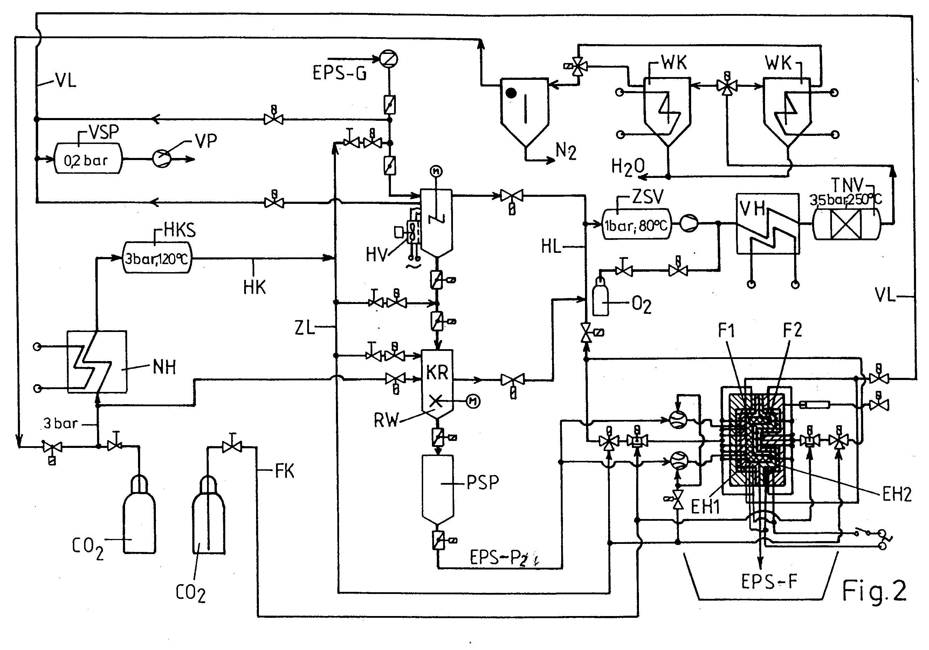

Fig. 2 zeigt eine weitere Ausführung einer Trockenschäumanlage. Die einzelnen Aggregate und Leitungen sind mit den gleichen Referenzbezeichnungen versehen wie in Fig. 1, soweit diese gleichartige Funktionen oder gleichartige Medien führen. Hier werden die vorteilhaften Unterschiede dargelegt.

Der Vorschäumer (VS) ist mit einem Heißgasgebläse (HV) bestückt, das thermostatisch gesteuert elektrische Heißleistung einbringt, wodurch der Heizgasdurchsatz seitens der Heißgasleitung (HK) und die aufzubereitende Abgasmengen verringert werden.

Weiterhin ist im Konditionierer (KR) ein Rührwerk (RW) eingebaut, wodurch ein Verklumpen der aufgeweichten Perlen beim Erkalten verhindert wird.

Dem Konditionierer (KR) ist ein Puffer (PSP) für das vorgeschäumte Perlenmaterial (EPS-P) nachgeordnet, der Bedarfsspitzen der Verbraucher den Chargen des Vorschäumers (VS) und des Konditionierers (KR) anpaßt.

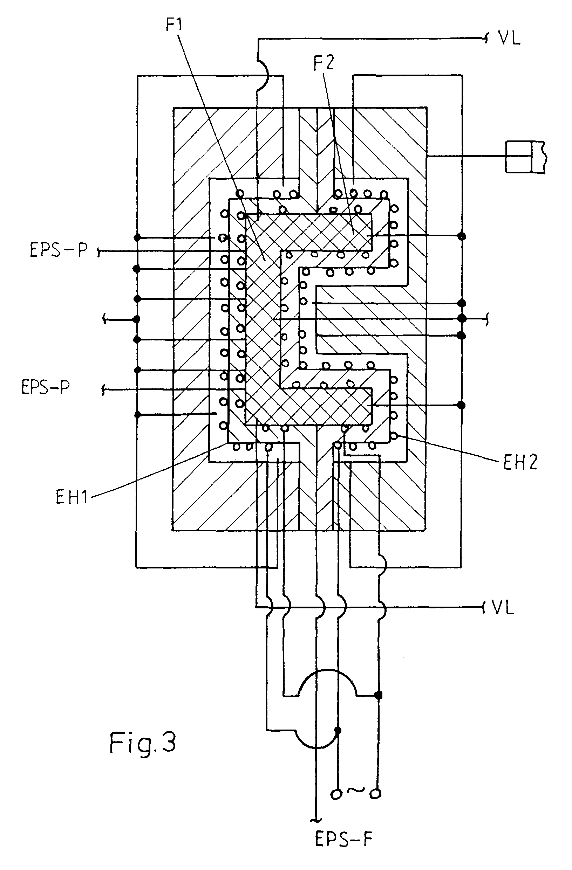

Der Fertigschäumer ist, wie insbesondere Fig. 3 zeigt, mit Elektroheizungen (EH1, EH2) auf seinen Formteilen (F1, F2) versehen. Die Heizungen bestehen aus elektrisch isolierten, gut wärmekontaktierten Widerstandsdrähten, die so angeordnet sind, daß in der Kühlphase das in den benachbarten Formhohlraum (H1, H2) injizierte Flüssiggas in seiner Kühlwirkung möglichst wenig behindert ist. Die Heizdrähte sind deshalb mit entsprechenden Zwischenräumen in oder auf der Formwand (F1, F2) angeordnet. Die Heizdrähte können innen und/oder außen in der Formwand (F1, F2) angebracht sein. Eine nicht dargestellte thermostatische Steuerung des Heizstromes sorgt für schnelles Aufheizen und verhindert eine Zersetzung oder Schädigung des Schaumstoffes an seiner Oberfläche. Durch die Elektroheizung (EH1, EH2) wird der Verbrauch an Heißgas (HK) verringert, ebenso wie der Anfall an Abgas. Die Treibgaskonzentration im Abgas steigt demgemäß.

Das Beschicken des Formraumes ist über zwei Injektoren (I) vorgesehen, was z.B. von der Objektgeometrie abhängt und die Füllzeit vermindert bei gleichmäßig vorzunehmender Füllung. Die Steuerung der Zuleitung der Gase verschiedener Drucke und Temperaturen sowie der Abgasableitung geschieht über kaskadierte gesteuerte Ventile. Das Abgas (AL) wird gemäß Fig. 2 in einem Zwischenspeicher (ZSV) aufgefangen und über einen Vorheizer (VH) in den Katalytbrenner (TNV) gepumpt, wo bei etwa 3,5 bar Druck eine Temperatur von ca. 250°C herrscht. In Kühlfallen (WK) wird im Wechselbetrieb das im Katalytbrenner (TNV) entstandene Wasser abgetrennt. Danach wird Stickstoff abgetrennt und die Kohlensäure mit etwa 3 bar Druck als kaltes Transport- oder Kühlmedium im Konditionierer (KR) eingesetzt oder dem Nachheizer (NH) zugeführt.

## Patentansprüche

1. Verfahren zum Herstellen von EPS-Schaumstoffteilen, bei dem mit einem flüssigen Treibmittel beladenes EPS-Granulat (EPS-G) mit einem Wärmeübertragungsmedium vorgeschäumt wird, anschließend abgekühlt wird, bis das Treibmittel kondensiert ist, und dann die geschäumten EPS-Perlen (EPS-P) in einen Formhohlraum in einer Formvorrichtung (F1, F2) verbracht und wieder erwärmt werden und ein dabei dementsprechend entstehendes Formteil gesintert und abgekühlt entformt und in einem Umgebungsmedium konditioniert wird,
dadurch gekennzeichnet, daß als das Wärmeübertragungsmedium und/oder als Umgebungsmedium beim Vorschäumen und/oder beim Erwärmen und Sintern des Formteiles (EPS-F) und/oder beim Abkühlen und/oder Konditionieren der EPS-Perlen (EPS-P) und/oder des Formteils (EPS-F) im wesentlichen ein hochpermeierendes Permanentgas, insbesondere Kohlensäuregas, oder ein Permanentgas-Treibgasgemisch benutzt wird.

2. Verfahren nach Anspruch 1, dadurch gekennzeichnet, daß bei dem Vorschäumen das EPS-Granulat (EPS-G) in einem Rührwerk (RW) heißem Permanentgas (HK) oder -Treibgasgemisch bei einem Überdruck ausgesetzt werden, bis sie eine Temperatur, die über der Erweichungstemperatur des EPS-Granulats (EPS-G) und der Verdampfungstemperatur des Treibmittels liegt, von mindestens 70°C, vorzugsweise von über 90°C, erreicht haben, und daß die so gebildeten EPS-Perlen (EPS-P) dann mit kühlem Permanentgas oder -Treibgasgemisch begast werden, bis sie unter die Erweichungstemperatur abgekühlt und verfestigt sind.

3. Verfahren nach Anspruch 1 oder 2, dadurch gekennzeichnet, daß das Konditionieren der EPS-Perlen (EPS-P) in einer Permanentgas- oder -Treibgasgemisch-Atmosphäre etwa bei Raumtemperatur und Atmosphärendruck erfolgt bis der Innendruck der EPS-Perlen (EPS-P) etwa dem Atmosphärendruck entspricht.

4. Verfahren nach einem der vorstehenden Ansprüche, dadurch gekennzeichnet, daß das Erwärmen und Sintern des Formteiles (EPS-F) mit heißem umströmenden Permanentgas (HK) oder -Treibgasgemisch, bei einem Einströmdruck und einem Druckgefälle zur Ausgangsseite der Formvorrichtung (F1, F2) erfolgt, bis die Erweichungstemperatur der EPS-Perlen (EPS-P) überschritten ist und mindestens 90°C, vorzugsweise 120°C, erreicht sind, wonach ein Sinterdruck bis zur vollständigen Versinterung gehalten wird.

5. Verfahren nach einem der vorstehenden Ansprüche, dadurch gekennzeichnet, daß das Abkühlen des EPS-Formteiles (EPS-F) durch verdampfende flüssige Kohlensäure erfolgt, die der Formvorrichtung (F1, F2) zugeführt wird, bis eine Temperatur unter der Erweichungstemperatur des EPS-Formteils (EPS-F) erreicht ist.

6. Verfahren nach einem der vorstehenden Ansprüche, dadurch gekennzeichnet, daß das Konditionieren des EPS-Formteiles in einer Permanentgas- oder -Treibgasgemisch-Atmosphäre etwa bei Raumtemperatur und Atmosphärendruck erfolgt, bis der Innendruck in den Vakuolen des EPS-Formteils (EPS-F) etwa dem Atmosphärendruck entspricht.

7. Verfahren nach einem der vorstehenden Ansprüche, dadurch gekennzeichnet, daß die EPS-Perlen (EPS-P) mit Permanentgas oder -Treibgasgemisch fluidisiert transportiert werden und/oder das EPS-Formteil (EPS-F) mittels Permanentgas oder -Treibgasgemisch entformt wird.

8. Verfahren nach einem der vorstehenden Ansprüche, dadurch gekennzeichnet, daß bei dem Vorschäumen, dem Erwärmen, dem Sintern, dem Kühlen, dem Konditionieren, dem Fluidisieren oder dem Entformen anfallendes abgekühltes oder aufgewärmtes mit dem Treibgas versetztes Permanentgas durch einen Treibgaskondensator (TK) oder, bedarfsweise unter Sauerstoffzusatz, durch einen katalytischen Treibgasbrenner (TNV) geleitet wird und der dabei entstehende Wasserdampf in einem einzelnen oder wechselbetriebenen Wasserdampfkondensator (WK) kondensiert und das Kohlensäuregas dann erhitzt und komprimiert oder in einer Kältemaschine (KM) komprimiert, abgekühlt und evtl. verflüssigt über Zwischenspeicher (HKS, FSV) zur erneuten Verwendung im Verfahren bereitgestellt wird, so daß ein geschlossener mehrfach verzweigter Permanentgas-Kreislauf, ggf. Kohlensäurekreislauf, gebildet wird.

9. Verfahren nach Anspruch 8, dadurch gekennzeichnet, daß das in dem Treibgaskondensator (TK) oder in dem Wasserdampfkondensator (WK) abgekühlte Kohlensäuregas in einer Kältemaschine (KM) komprimiert und verflüssigt gespeichert wird.

10. Verfahren nach Anspruch 9 oder 10, dadurch gekennzeichnet, daß Verflüssigungswärme (Q) von der Kältemaschine (KM) entzogen und dem Kohlensäuregas (HK) als Heizwärme vor dem Komprimieren und Nachheizen zugeführt wird.

11. Verfahren nach Anspruch 8, dadurch gekennzeichnet, daß mit dem Treibgas versetztes Kohlensäuregas einer mehrstufigen Kältemaschine (KM) zugeführt wird, in deren ersten Stufe (KM1) das Treibgas verflüssigt und abgetrennt wird und in deren letzten Stufe (KM3) die flüssige Kohlensäure gewonnen wird.

12. Verfahren nach einem der vorstehenden Ansprüche, dadurch gekennzeichnet, daß beim Vorschäumen und/oder beim Fertigschäumen elektrische Heizenergie in den Vorschäumer (VS) bzw. die Formvorrichtung (F1, F2) thermostatisch gesteuert eingebracht wird.

13. Verfahren nach einem der vorstehenden Ansprüche, dadurch gekennzeichnet, daß vorgeschäumte EPS-Perlen (EPS-P) beim Konditionieren zur Verhinderung von Verklumpungen bis zur Verfestigung gerührt werden.

14. Verfahren nach Anspruch 13, dadurch gekennzeichnet, daß die konditionierten EPS-Perlen (EPS-P) in einem Pufferspeicher (PSP) zwischengelagert werden.

15. Vorrichtung zur Durchführung des Verfahrens nach einem der Ansprüche 1 bis 14, dadurch gekennzeichnet, daß ein Vorschäumer (VS) und eine Formvorrichtung (F1, F2) jeweils über Ventile mit einer Zuleitung (ZL) eines heißen Permanentgases oder -Treibgasgemisches (HK) und mit einer Ableitung (AL) eines Permanentgas-Treibgasgemisches verbunden sind, und die Ableitung (AL) über einen Kompressor (KP) und eine Nachheizvorrichtung (NH) mit der Zuleitung (ZL) verbunden ist und ein im wesentlichen geschlossenes Medienumlaufsystem bilden.

16. Vorrichtung nach Anspruch 15, dadurch gekennzeichnet, daß dem Vorschäumer (VS) ein Konditionierer (KR) zur Aufnahme von EPS-Perlen (EPS-P) nachgeschaltet ist, dem ggf. über einen Pufferspeicher (PSP) mindestens ein Injektor (I) der Formvorrichtung (F1, F2) nachgeschaltet ist, und der Vorschäumer mit einer Permanentabgaszuleitung und mit der Ableitung (AL) jeweils gesteuert verbunden ist.

17. Vorrichtung nach Anspruch 15 oder 16, dadurch gekennzeichnet, daß die Formvorrichtung (F1, F2) über ein Ventil mit einem Kohlensäureflüssigkeitsspeicher (FSV) verbunden ist.

18. Vorrichtung nach einem der Ansprüche 15 bis 17, dadurch gekennzeichnet, daß die Formvorrichtung (F1, F2) über Ventile mit einer Vakuumleitung (VL) verbunden ist, die über eine Vakuumpumpe (VP) mit der Ableitung (AL) verbunden ist.

19. Vorrichtung nach einem der Ansprüche 15 bis 18, dadurch gekennzeichnet, daß in den Verlauf der Ableitung (AL) ggf. über eine Vorheizvorrichtung (VH) eine Katalytverbrennungsvorrichtung (TNV) für Treibgas angeordnet ist.

20. Vorrichtung nach einem der Ansprüche 15 bis 19, dadurch gekennzeichnet, daß in den Verlauf der Ableitung (AL) und/oder hinter einer ersten Stufe einer Kältemaschine (KM1) und/oder hinter der Katalytverbrennungsvorrichtung (TNV) ein Kondensator (TK, WK, TK1) für Treibgas und/oder Wasserdampf angeordnet ist/sind und ggf. ein Stickstoffabscheider angeordnet ist und das gereinigte Kohlensäuregas in einem Kohlensäure-Kreislauf rückgeführt ist.

21. Vorrichtung nach Anspruch 20, dadurch gekennzeichnet, daß die Kältemaschine (KM) mit dem Kohlensäureflüssigkeitsspeicher (FSV) einspeisend verbunden ist.

22. Vorrichtung nach einem der Ansprüche 15 bis 21, dadurch gekennzeichnet, daß an oder in dem Vorschäumer (VS) eine thermostatisch gesteuerte elektrische Heizvorrichtung (HV) angeordnet ist.

23. Vorrichtung nach Anspruch 22, dadurch gekennzeichnet, daß die Heizvorrichtung (HV) eine elektrisch beheizte Umluftheizung ist.

24. Vorrichtung nach einem der Ansprüche 15 bist 23, dadurch gekennzeichnet, daß die Formwände der Formvorrichtung (F1, F2) mit einer steuerbaren, thermostatisch geregelten elektrischen Heizung (EH1, EH2) versehen sind.

25. Vorrichtung nach einem der Ansprüche 15 bis 24, dadurch gekennzeichnet, daß der Konditionierer (KR) ein Rührwerk (RW) enthält.
